# EUROPÄISCHE PATENTANMELDUNG

(11) **EP 2 377 783 A1**
(43) Veröffentlichungstag der Anmeldung: **19.10.2011**
(21) Anmeldenummer: 10290202.0
(22) Anmeldetag: 14.04.2010
(51) Int. Cl.: B65G 13/075

(54) **Förderrolle mit Fliehkraftbetätigter Magnetbremse.**

(71) Anmelder: Interroll Holding AG, 6592 San' Antonio (CH)
(72) Erfinder: Séjourné, Jérome, 85530 La Bruffiere (FR)
(74) Vertreter: Müller-Boré & Partner Patentanwälte

(57) **Zusammenfassung**

Förderrolle (10) umfassend ein Mantelelement (20), ein Achselement (40) und eine Magnetbremse (50) mit einer Magnetkomponente (51) und einer mit der Magnetkomponente (51) korrespondierenden Bremskomponente (54), wobei das Mantelelement (20) relativ zu dem Achselement (40) um eine Drehachse drehbar gelagert ist, wobei die Magnetbremse (50) kinematisch zwischen dem Achselement (40) und dem Mantelelement (20) vorgesehen und mit dem Achselement (40) und dem Mantelelement (20) derart verbunden ist, dass eine Drehung des Mantelelements um die Drehachse durch die Magnetbremse (50) gebremst werden kann, wobei die Magnetkomponente (51) und die Bremskomponente (54) relativ zueinander zwischen einer Ruheposition und einer Bremsposition verlagerbar angeordnet sind, und wobei ferner eine Fliehkrafteinrichtung (60) zur drehzahlabhängigen Verlagerung zumindest einer der Magnetbremskomponenten (51, 54) zwischen der Ruheposition und der Bremsposition vorgesehen ist.

## Beschreibung

### Gebiet der Erfindung

Die Erfindung betrifft eine Förderrolle und eine Förderstrecke mit einer solchen Förderrolle.

### Hintergrund der Erfindung und Stand der Technik

Es existieren im Stand der Technik Rollenförderer mit Rollen. Diese Rollenförderer werden z.B. in Regallagern verwendet, wobei ein Regal mehrere Rollenförderer über- und nebeneinander aufweisen kann. Auf einem Rollenförderer können mehrere Paletten mit Waren hintereinander gelagert werden, die auf den Rollen laufen.

Die Rollenförderer werden in der Regel entweder von einer Seite beladen und von der anderen Seite entladen, so dass die Güter, die zuerst auf die Rollenförderer gelangen auch wieder zuerst von dieser entladen werden. Diese Regallager werden first-in-first-out-Lager oder FIFO-Lager genannt. Manche dieser FIFO-Rollenförderer weisen eine vom Beladepunkt zum Entladepunkt abfallende Neigung auf, so dass Paletten, die sich auf dem Rollenförderer befinden, von der Schwerkraft in Richtung Entladepunkt befördert werden.

Bei einer anderen Alternative werden die Rollenförderer von einer Seite beladen und von der selben Seite entladen, so dass die Güter, die zuletzt auf die Rollenförderer gelangen zuerst von diesen entladen werden. Diese Regallager werden last-in-first-out-Lager oder LIFO-Lager genannt. Auch diese Lager weisen z.T. eine Neigung in Richtung des Belade- bzw. Entladepunktes auf. Beim Beladen einer weiteren neuen Palette, z.B. durch einen Gabelstapler, werden die Paletten, die sich bereits auf dem Rollenförderer befinden, mit der neuen Palette entgegen der Steigung nach hinten geschoben. Außerdem wird durch diese Steigung bewirkt, dass die Paletten, die sich auf dem Rollenförderer befinden, immer der Schwerkraft folgend am Entladepunkt anstehen.

Um bei den Rollenförderern die Geschwindigkeit der ablaufenden Paletten abzubremsen, werden die Rollen der Förderstrecken zum Teil mit Bremsen versehen, über welche die Geschwindigkeit der Rollen und damit der Paletten abgebremst werden kann. So kann verhindert werden, dass die Paletten mit zu hoher Geschwindigkeit aufeinander auflaufen.

In einigen Ausführungen werden dabei Wirbelstrombremsen eingesetzt. Eine solche Vorrichtung zum Abbremsen einzelner Rollen von Rollenbahnen wird in der DE 7300091 U beschrieben. Eine weitere Ausführungsform wird in EP 1 243 528 A1 beschriebene.

Ferner können z.B. mechanische Fliehkraftbremsen Verwendung finden, bei denen die Bremsbeläge der Bremsen erst bei einer bestimmten Umdrehungsgeschwindigkeit an korrespondierende Bremsflächen angestellt werden und dann mit steigender Umdrehungsgeschwindigkeit aufgrund der Fliehkraft immer stärker an die Bremsflächen angedrückt werden. So wird gewährleistet, dass sich die Rollen bei niedriger Geschwindigkeit ungebremst drehen können. Bei höheren Geschwindigkeiten wird eine immer größere Bremskraft bereit gestellt, so dass ein Überschreiten bestimmter Geschwindigkeiten verhindert werden kann. Eine derartige Bremsrolle wird z.B. in der DE 202 12 979 U1 beschrieben.

Derartige gebremste Rollen können insbesondere bei LIFO-Förderern beschädigt oder zerstört werden, wenn z.B. Paletten mittels eines Gabelstaplers, mit zu hoher Geschwindigkeit und großer Schubkraft entgegen der Steigung der Förderstrecke auf die Rollenförder geschoben werden. In diesem Fall werden die Fliehkraftbremsen aktiviert und die Paletten werden durch den Gabelstapler mit großer Kraft entgegen der Bremskraft angeschoben. Da die Rollen und die enthaltenen Bremsvorrichtungen mit vertretbarem wirtschaftlichem Aufwand nur schwer ausreichend stabil ausgelegt werden können, können die Rollen dabei beschädigt werden. Dadurch können zusätzliche Reparatur- und Wartungskosten anfallen. Zur Lösung dieses Problems schlägt die EP 1 847 485 A1 vor, einen Freilauf in der Bremsrolle vorzusehen, so dass die Bremswirkung der beschriebenen Fliehkraftbremse nur in einer Drehrichtung bereit gestellt wird.

### Aufgabe

Der Erfindung liegt daher die Aufgabe zugrunde, eine kompakte Förderrolle und eine Förderstrecke mit wenigstens einer solchen Förderrolle bereitzustellen, die günstig herzustellen sind, die eine hohe Lebensdauer aufweisen und über ihre Lebensdauer geringe Wartungs- und/oder Reparaturkosten verursachen.

### Lösung der Aufgabe

Die Aufgabe wird durch die Gegenstände der nebengeordneten Ansprüche gelöst. Vorteilhafte Ausführungsformen sind Gegenstände der Unteransprüche.

Ein erster unabhängiger Aspekt zur Lösung der Aufgabe betrifft eine Förderrolle umfassend ein Mantelelement, ein Achselement und eine Magnetbremse mit einer Magnetkomponente und einer mit der Magnetkomponente korrespondierenden Bremskomponente, wobei das Mantelelement relativ zu dem Achselement um eine Drehachse drehbar gelagert ist, wobei die Magnetbremse kinematisch zwischen dem Achselement und dem Mantelelement vorgesehen und mit dem Achselement und dem Mantelelement derart verbunden ist, dass eine Drehung des Mantelelements um die Drehachse durch die Magnetbremse gebremst werden kann, wobei die Magnetkomponente und die Bremskomponente relativ zueinander zwischen einer Ruheposition und einer Bremsposition verlagerbar angeordnet sind, und wobei ferner eine Fliehkrafteinrichtung zur drehzahlabhängigen Verlagerung zumindest einer der Magnetbremskomponenten zwischen der Ruheposition und der Bremsposition vorgesehen ist.

Die Magnetbremse kann als Wirbelstrombremse, als Hysteresebremse oder als Generator ausgestaltet sein. Eine Wirbelstrombremse ist eine verschleißfreie Bremse, die Wirbelstromverluste nutzt. Dabei wird eine elektrisch leitende Bremskomponente, z.B. eine Metallscheibe oder ein Metallrohr, die als Rotor oder Stator ausgebildet sein kann, in einem von einem oder mehreren Permanentmagneten oder Elektromagneten erzeugten, äußeren Magnetfeld bewegt, wodurch Ströme in der Bremskomponente erzeugt werden, die selber wieder ein Magnetfeld erzeugen, das dem äußeren Magnetfeld entgegengesetzt ist und die Bremskomponente somit bremst. Der elektrische Widerstand der Metallplatte bildet für die Wirbelströme einen ohmschen Verbraucher, wodurch die Bewegungsenergie in Wärme umgesetzt wird. Bei einer Wirbelstrombremse spielt die Magnetisierbarkeit der Bremskomponente für die Induktion keine Rolle, allein die elektrische Leitfähigkeit ist entscheidend. Ein Vorteil von Wirbelstrombremsen ist deren Wartungsfreiheit. Eine Hysteresebremse ist eine Bremse, die auf der Wirkung eines oder mehrere Magneten, z.B. eines Permanentmagneten oder eines Elektromagneten, auf eine sich relativ zum Magneten bewegende Bremskomponente basiert, die ein ferromagnetisches Material aufweist. Dabei führt die Bewegung des ferromagnetischen Materials im Magnetfeld zu einer ständigen Ummagnetisierung des ferromagnetischen Materials. Im Gegensatz zur Wirbelstrombremse ist die erzeugte Kraft/das erzeugte Moment bei der Hysteresebremse nicht geschwindigkeits- bzw. drehzahlabhängig, d.h. die Hysteresebremse funktioniert gleichmäßig vom Stillstand bis zur konstruktiv möglichen Maximalgeschwindigkeit bzw. -drehzahl. Auch Hysteresebremsen zeichnen sich durch eine besonders lange Lebensdauer aus.

Der Ausdruck "kinematisch zwischen" bedeutet, dass die Magnetbremse entlang eines Bremsstrangs zwischen dem Achselement und dem Mantelelement angeordnet ist, sodass sich ein von der Bremse erzeugtes Bremsdrehmoment einerseits am Achselement abstützen und andererseits auf das Mantelelement übertragen werden kann. Die Magnetkomponente weist zumindest einen Magneten auf, der als integraler Bestandteil der Magnetkomponente ausgebildet sein kann oder als separat hergestelltes Bauteil an einem Magnetträger der Magnetkomponente befestigt sein kann. Insbesondere ist denkbar, dass mehrere Magneten an einem Magnetträger befestigt sind. Die Bremskomponente kann aus einem Messingmaterial hergestellt sein. Ein solches Messingmaterial kann z.B. einen Zinkanteil von zwischen 5% und 15% (Gewichtsprozent) aufweisen. Ein solches Material hat eine gute elektrische Leitfähigkeit und kann Wärme gut abführen. Als Mantelelement wird ein Bauelement oder eine Gruppe von Bauelementen bezeichnet, welche(s) eine kreiszylindrische Außenoberfläche der Bremsrolle bereitstellt bzw. bereitstellen. Der Ausdruck "relativ zueinander verlagerbar" bedeutet, dass zumindest eine der Magnetbremskomponenten (Magnetkomponente oder Bremskomponente) verlagerbar ist.

Das Achselement kann Bestandteil einer ein oder mehrteiligen Achse sein, über welche die Förderrolle an einem Förderrahmen drehbar gelagert werden kann. Das oder die Achselement(e) kann bzw. können drehfest an einem Rollenrahmen festlegbar sein. Das Mantelelement kann über ein oder mehrere Lager auf der Achse gelagert sein. Ein solches Lager kann ein Wälzlager oder ein Gleitlager sein.

Der Begriff Bremsposition bezeichnet eine Position der Magnetkomponente relativ zur Bremskomponente, in der bei einer Rotation der Magnetkomponente relativ zur Bremskomponente ein Bremsdrehmoment zwischen der Magnetkomponente und der Bremskomponente erzeugt wird. Der Begriff Ruheposition bezeichnet eine Position der Magnetkomponente relativ zur Bremskomponente, in der bei einer Rotation der Magnetkomponente relativ zur Bremskomponente kein oder annähernd kein Bremsdrehmoment zwischen der Magnetkomponente und der Bremskomponente erzeugt wird.

Die Fliehkrafteinrichtung kann derart gestaltet und mit zumindest einer der Magnetbremskomponenten gekoppelt sein, dass bei einer drehzahlabhängigen Betätigung zumindest eine der Magnetbremskomponenten aufgrund der Betätigung der Fliehkrafteinrichtung von der Ruheposition in die Bremsposition und/oder von der Bremsposition in die Ruheposition verlagerbar ist.

Bei der Entwicklung der beanspruchten Förderrolle wurde erkannt, dass die Verwendung von herkömmlichen Wirbelstrombremsen dann nachteilig sein kann, wenn durch die Wirbelstrombremse bereits im unteren Drehzahlbereich eine Bremswirkung erzeugt wird, da so das Anlaufen von besonders leichten Fördergütern auf besonders flach geneigten Förderstrecken negativ beeinflusst werden kann. Durch die beanspruchte Gestaltung, bei der die Magnetkomponente und die Bremskomponente relativ zueinander in eine Ruheposition verbracht werden können, kann die Bremswirkung der Wirbelstrombremse annähernd auf Null reduziert werden, so dass das Losbrechmoment der gebremsten Förderrollen reduziert werden kann. So ist es möglich, den Gewichtsbereich von auf einer Förderstrecke mit derartigen Förderrollen transportierbaren Fördergütern zu erweitern.

Eine Ausführungsform betrifft die vorstehend beschriebene Förderrolle, wobei die Magnetkomponente einen Magnetträger und zumindest einen an dem Magnetträger befestigten Magneten aufweist.

Bei einer Vielzahl von Magneten können diese so angeordnet sein, dass die Bereiche der Magnete mit der größten Feldstärke, die in der Regel einen Pol des Magnets bilden, in der Bremsposition derart im Verhältnis zur Bremskomponente angeordnet sind, dass die Feldlinien in den Bereichen mit der größten Feldstärke (im Folgenden als Polfeldlinien bezeichnet) in Richtung der Bremskomponente weisen. Dabei können die Magnete so angeordnet sein, dass sich die Polarität von einem zum nächsten unmittelbar benachbarten Pol jeweils abwechselt.

Eine weitere Ausführungsform betrifft eine der vorstehend beschriebenen Förderrollen, wobei die Bremskomponente als Rohrabschnitt mit einem kreiszylindrischen Querschnitt ausgebildet ist.

Bei dieser Ausführungsform kann können die Magnete der Magnetkomponente derart angeordnet sein, dass die Polfeldlinien im Verhältnis zur Drehachse des Mantelelements radial nach außen verlaufen. So kann eine im Bremszustand innerhalb und/oder außerhalb der als kreiszylindrischer Rohrabschnitt ausgebildeten Bremskomponente angeordnete Magnetkomponente ein Magnetfeld erzeugen, in dem sich die Bremskomponente relativ zum Magnetfeld dreht und dabei die Polfeldlinien jeweils im Wesentlichen senkrecht durchläuft.

Eine weitere Ausführungsform betrifft eine der vorstehend beschriebenen Förderrollen, wobei die Bremskomponente als fester Bestandteil des Mantelelements ausgeführt ist, und wobei die Magnetkomponente in der Bremsposition in einer zur Drehachse des Mantelelements parallelen Richtung zumindest teilweise innerhalb der Bremskomponente verlagert ist.

Die Magnetkomponente kann in der Bremsposition auch vollständig innerhalb des Mantelelements angeordnet sein. Die Bremskomponente kann durch einen einstückigen Abschnitt des Mantelelements gebildet werden, also zusammen mit einem anderen Bereich des Mantelelements aus einem Teil hergestellt werden, oder als separates Bauteil, z.B. über eine Presspassung, mit dem Mantelelement verbunden sein. Im Fall einer als kreiszylindrischer Rohrabschnitt ausgebildeten Bremskomponente kann die Bremskomponente, z.B. über eine Presspassung in den kreiszylindrischen Innenumfangsbereich des Mantelelements eingepresst sein, so dass sich aufgrund der festen Anlage zwischen dem Außenumfang der Bremskomponente und dem Innenumfangsbereich des Mantelelements eine gute Wärmeübertragung zwischen Bremskomponente und Mantelelement ergibt. Andere Passungen sind ebenfalls denkbar. Ferner kann die Bremskomponente in das Mantelelement eingeschraubt werden. Ein Schraubgewinde hat gegenüber einer glatten Anlagefläche den Vorteil einer vergrößerten Oberfläche, die eine noch bessere Wärmeabfuhr gewährleistet. Andere Befestigungsarten sind ebenfalls denkbar.

Noch eine weitere Ausführungsform betrifft eine der vorstehend beschriebenen Förderrollen, wobei die Magnetkomponente in der Ruheposition in einer zur Drehachse des Mantelelements parallelen Richtung außerhalb der als kreiszylindrischer Rohrabschnitt ausgebildeten Bremskomponente angeordnet ist.

Die Magnetkomponente kann in der Ruheposition teilweise oder vollständig außerhalb der Bremskomponente angeordnet, also die Ruheposition verlagert sein. Der Ausdruck "vollständig außerhalb" in dem Sinn bedeutet, dass eine Ebene, die von Radien auf einen Punkt der Drehachse aufgespannt wird, existiert, die in der Ruheposition weder die Magnetkomponente noch die Bremskomponente schneidet. Dadurch kann gewährleistet werden, dass die Bremskomponente in der Ruheposition annähernd vollständig außerhalb eines Magnetfeldes der Magnetkomponente angeordnet ist, so dass bei einer Rotation der Bremskomponente relativ zur Magnetkomponente annähernd keine Bremswirkung erzeugt wird. Bei anderen Ausführungsformen kann eine teilweise Überdeckung von Magnetkomponente und Bremskomponente zulässig sein. In beiden Fällen wird eine geringe Bremswirkung in der Ruheposition angestrebt. Eine geringe Bremswirkung kann z.B. in einem Bereich liegen, in dem das Bremsdrehmoment, das zwischen der Bremskomponente und der Magnetkomponente in der Ruheposition erzeugt wird, kleiner ist als der bremsende Einfluss von anderen Komponenten der Förderrolle, wie z.B. der Reibung in Lagern und/oder im Getriebe der Förderrolle. In der Ruheposition kann das aus dem Magnetfeld resultierende Bremsdrehmoment zwischen der Bremskomponente und der Magnetkomponente bei einer Umdrehungszahl zwischen der Bremskomponente und der Magnetkomponente von 0,1 m/s, z.B. kleiner als 1,2 Nm sein. Hierdurch kann insbesondere ein Anlaufen der Förderrolle aus dem Stillstand weiter erleichtert werden.

Eine weitere Ausführungsform betrifft eine der vorstehend beschriebenen Förderrollen, wobei die Förderrolle ferner ein Getriebe aufweist, wobei das Getriebe derart innerhalb der Förderrolle angeordnet ist, dass über das Getriebe eine rotatorische Relativbewegung zwischen dem Mantelelement und dem Achselement in eine rotatorische Antriebsbewegung eines Bremsantriebs der Magnetbremse umwandelbar ist.

Das Getriebe kann in der Förderrolle, insbesondere vollständig innerhalb des Mantelelements der Förderrolle, angeordnet sein. Der Bremsantrieb kann an der Bremskomponente und/oder an der Magnetkomponente angeordnet sein, so dass eine der Komponenten oder beide Komponenten rotatorisch derart antreibbar sind, dass sich die Bremskomponente und die Magnetkomponente relativ zueinander drehen. Über eine Übersetzung des Getriebes kann bewirkt werden, dass sich die Bremskomponente relativ zur Magnetkomponente schneller dreht als das Mantelelement relativ zum Achselement. Eine gewählte Übersetzung kann z.B. im Bereich zwischen 1:3 und 1:36 liegen. Ein solches Getriebe kann ein Umlaufrädergetriebe sein, das im Zweiwellenbetrieb und/oder im Dreiwellenbetrieb und/oder im Mehrwellenbetrieb betreibbar ist. Dabei kann ein erster Getriebeantrieb durch das Mantelelement oder ein mit dem Mantelelement verbundenes, insbesondere drehfest verbundenes, Teil gebildet werden. Ein zweiter Getriebeantrieb kann durch das Achselement oder ein mit dem Achselement verbundenes, insbesondere drehfest verbundenes, Teil gebildet werden. Ein Getriebeabtrieb kann mit dem Bremsantrieb verbunden sein. Bevorzugt wird ein einstufiges oder mehrstufiges Planetengetriebe im Zweiwellenbetrieb oder im Dreiwellenbetrieb verwendet. Dabei kann der Antrieb im Achselement im Verhältnis zur Lagerung der Förderrolle in einem Rollenrahmen festgelegt, insbesondere drehfest festgelegt, sein. Möglich ist ebenfalls, das Achselement, z.B. extern, gesondert anzutreiben, so dass die Relativgeschwindigkeit zwischen den Antrieben variiert werden kann und so die Bremswirkung eingestellt werden kann.

So kann z.B. auch bei einer verhältnismäßig langsamen Drehgeschwindigkeit des Mantelelements eine ausreichende Bremskraft aufgrund einer hohen relativen Umdrehungsgeschwindigkeit zwischen der Bremskomponente und der Magnetkomponente erzielt werden. Außerdem kann der Bremsantrieb mit der Fliehkrafteinrichtung verbunden sein, so dass diese gemeinsam rotieren können. Hierdurch kann eine ausreichende Fliehkraft in der Fliehkrafteinrichtung zur Betätigung der Fliehkrafteinrichtung und der damit gekoppelten Verlagerung zumindest einer der Magnetbremskomponenten (Magnetkomponente oder Bremskomponente) erzielt werden.

Eine weitere Ausführungsform betrifft eine der vorstehend beschriebenen Förderrollen, wobei der Bremsantrieb als ein Zahnrad des Getriebes der Magnetbremse ausgebildet ist.

Demnach kann das Zahnrad des Getriebes z.B. mit zumindest einer der Magnetbremskomponenten verbunden, insbesondere einstückig verbunden, sein und diese rotatorisch antreiben. Bei entsprechender Gestaltung kann hierdurch in axialer Richtung des Bremsantriebs Bauraum gespart werden.

Eine weitere Ausführungsform betrifft eine der vorstehend beschriebenen Förderrollen, wobei der Bremsantrieb mit der Magnetkomponente derart verbunden ist, dass der Bremsantrieb mit der Magnetkomponente gemeinsam rotatorisch antreibbar und verschieblich gelagert bereit gestellt wird.

Demnach kann der Bremsantrieb, insbesondere ein als Zahnrad des Getriebes ausgeführter Bremsantrieb, mit der Magnetkomponente verbunden sein und diese rotatorisch antreiben. Durch die verschiebliche Lagerung kann die Magnetkomponente zwischen einer Ruheposition und einer Bremsposition verschoben werden. Dabei kann die verschiebliche Lagerung z.B. als Gleitlagerung auf einer Achse, insbesondere auf dem Achselement, ausgeführt sein, so dass der Bremsantrieb in einer zu der Drehachse des Bremsantriebs parallelen Richtung verschoben werden kann. Wenn der Bremsantrieb als Zahnrad des Getriebes ausgeführt ist, kann das Zahnrad in der Bremsposition der Magnetkomponente vollständig in das Getriebe eingeschoben sein, so dass das Zahnrad im Wesentlichen über die gesamte Zahnflankenbreite mit korrespondierenden Zahnrädern in Eingriff stehen kann, so dass ein großes Drehmoment übertragen werden kann. In der Ruheposition kann das Zahnrad weitgehend aus dem Getriebe herausverlagert sein, so dass nur noch ein Teil der Zahnflankenbreite mit den korrespondierenden Zahnrädern in Eingriff steht. In der Ruheposition kann das Zahnrad trotz der geringen Überdeckung der miteinander in Eingriff befindlichen Zähne immer noch rotatorisch angetrieben werden auch wenn aufgrund der geringen Überdeckung nur ein kleineres Drehmoment übertragen werden kann. Z.B. kann die Eingriffslänge der miteinander in Eingriff befindlichen Zähne in der Ruheposition lediglich 20% der Eingriffslänge in der Bremsposition sein. Denkbar ist auch, dass in der Ruheposition lediglich eine Eingriffslänge von 10% oder weniger bereit gestellt wird.

Eine weitere Ausführungsform betrifft eine der vorstehend beschriebenen Förderrollen, wobei das Getriebe zumindest ein Planetengetriebe mit einem Sonnenrad und zumindest einem Planetenrad aufweist und wobei ein Abschnitt des Bremsantriebs als das Sonnenrad des zumindest einen Planetengetriebes ausgebildet ist, das in einer zu der Drehachse des Sonnenrades parallelen Richtung relativ zu dem zumindest einen Planetenrad verschieblich gelagert ist.

Hierbei gelten die vorstehend gemachten Erläuterungen hinsichtlich der Ausführungsformen, bei denen der Bremsantrieb als ein Zahnrad des Getriebes der Magnetbremse ausgeführt ist und/oder bei der der Bremsantrieb mit der Magnetkomponente derart verbunden ist, dass der Bremsantrieb mit der Magnetkomponente gemeinsam rotatorisch antreibbar und verschieblich gelagert bereit gestellt wird.

Eine weitere Ausführungsform betrifft eine der vorstehend beschriebenen Förderrollen, wobei die Fliehkrafteinrichtung eine erste und eine zweite Fliehkraftscheibe und zumindest einen zwischen der ersten und der zweiten Fliehkraftscheibe angeordneten Fliehkraftkörper aufweist, wobei die erste und die zweite Fliehkraftscheibe jeweils um eine gemeinsame Drehachse drehbar und relativ zueinander in einer zu der Drehachse parallelen Richtung verschieblich gelagert sind, wobei der zumindest eine Fliehkraftkörper in einem Fliehkraftgang geführt wird, wobei die erste und die zweite Fliehkraftscheibe zumindest entlang eines Teilbereichs des Fliehkraftgangs miteinander korrespondierende Fliehkraftscheibenflächen aufweisen, von denen zumindest eine der beiden Fliehkraftscheibenflächen eine Steigung aufweist, die bewirkt dass die Fliehkraftscheiben in einer zu der Drehachse parallelen Richtung durch den Fliehkraftkörper auseinander gedrückt werden, wenn der Fliehkraftkörper von der Drehachse weg nach außen verlagert wird.

Ein Fliehkraftkörper kann z.B. in Form einer Kugel, insbesondere in Form einer Stahlkugel, bereit gestellt werden. Andere Formen von Fliehkraftkörpern sind ebenfalls denkbar.

Die erste und die zweite Fliehkraftscheibe können miteinander drehschlüssig verbunden sein oder unabhängig voneinander um die gemeinsame Drehachse drehbar sein. Dabei können die erste und die zweite Fliehkraftscheibe auf einer gemeinsamen Achse, z.B. dem Achselement, oder auf getrennten Achsen verschieblich in einer zu der Drehachse parallelen Richtung verschieblich gelagert sein. Denkbar ist ebenfalls, dass zwar beide Fliehkraftscheiben drehbar aber lediglich eine der beiden Fliehkraftscheiben, insbesondere die erste Fliehkraftscheibe, verschieblich gelagert sind.

Der Fliehkraftgang kann an der ersten Fliehkraftscheibe und/oder an der zweiten Fliehkraftscheibe ausgebildet sein. Denkbar ist ebenfalls, dass der Fliehkraftgang an einer dritten Fliehkraftscheibe ausgebildet ist, die zwischen der ersten und der zweiten Fliehkraftscheibe angeordnet ist.

Im Fall, dass Teile des Fliehkraftgangs sowohl an der ersten als auch an der zweiten Fliehkraftscheibe ausgebildet sind, kann ein formschlüssiger Drehschluss zwischen den Fliehkraftscheiben über den Fliehkraftkörper bewirkt werden, der auf einer Seite teilweise im Fliehkraftgang der ersten Fliehkraftscheibe und auf der anderen Seite teilweise im Fliehkraftgang der zweiten Fliehkraftscheibe aufgenommen wird. In den anderen Fällen kann ein reibschlüssiger Drehschluss zwischen den Fliehkraftscheiben über eine Reibungskraft zwischen der ersten Fliehkraftscheibe und dem Fliehkraftkörper sowie zwischen der zweiten Fliehkraftscheibe und dem Fliehkraftkörper bewirkt werden.

Wenn die Fliehkrafteinrichtung mehrere Fliehkraftkörper umfasst, können mehrere Fliehkraftgänge vorgesehen werden, wobei in jedem der Fliehkraftgänge jeweils ein Fliehkraftkörper geführt sein kann. Insbesondere können drei Fliehkraftkörper vorgesehen werden, von denen jeder in einem separaten Fliehkraftgang geführt wird. Die drei Fliehkraftgänge können in Umfangsrichtung um jeweils 120° versetzt angeordnet sein. Der Fliehkraftgang kann einen Abschnitt aufweisen, der sich radial in Richtung des Außenbereichs der Fliehkraftscheiben erstreckt. Der Abschnitt kann einen gekrümmten Verlauf oder einen im Wesentlichen geraden Verlauf haben. Der Abschnitt kann sich z.B. parallel zu einem von der Drehachse erstreckenden Radiusstahl erstrecken oder mit dem Radius zusammenfallen.

Denkbar ist ferner, dass sowohl die Fliehkraftscheibenfläche der ersten Fliehkraftscheibe als auch die Fliehkraftscheibenfläche der zweiten Fliehkraftscheibe eine Steigung aufweist. Die Steigung kann von einem Innenbereich der Fliehkraftscheibe in Richtung eines radial weiter außen gelegenen Außenbereichs der Fliehkraftscheibe und in Richtung der benachbarten Fliehkraftscheibe ansteigen. In anderen Worten ausgedrückt, können die weiter außen in Richtung des Mantelelements gelegenen Bereiche der Fliehkraftscheibenflächen der beiden Fliehkraftscheiben näher aneinander angeordnet sein als die weiter innen in Richtung der Drehachse gelegenen Bereiche der Fliehkraftscheibenflächen. Demnach kann der Fliehkraftkörper aufgrund der Fliehkraft nach außen gedrückt werden und dabei an einer schiefen Ebene angreifen, die durch zumindest eine der Fliehkraftscheibenflächen gebildet wird. Eine aus der Fliehkraft resultierende Kraftkomponente, die in eine Richtung parallel zur Drehachse der Fliehkraftscheibe wirkt, drückt die Fliehkraftscheiben auseinander. Dabei stützt sich der Fliehkraftkörper an der anderen Fliehkraftscheibe ab.

Eine weitere Ausführungsform betrifft eine der vorstehend beschriebenen Förderrollen, wobei zumindest eine der beiden Fliehkraftscheiben durch ein Federelement in Richtung der anderen Fliehkraftscheibe vorgespannt ist, so dass der Fliehkraftkörper entlang seines radialen Verlagerungswegs ständig mit beiden Fliehkraftscheiben in Berührungskontakt steht.

Dabei kann die Federkraft des Federelements derart bemessen sein, dass der Fliehkraftkörper erst bei Überschreiten einer ersten Grenzumdrehungsgeschwindigkeit eine Fliehkraft entwickelt die dazu führt, dass die Fliehkraftscheiben entgegen der Federkraft auseinander gedrückt werden. Das heißt, dass die aus der Fliehkraft resultierende Kraftkomponente, die in eine Richtung parallel zur Drehachse der Fliehkraftscheiben auf die Fliehkraftscheiben wirkt, übersteigt erst bei einer bestimmten Umdrehungsgeschwindigkeit die Federkraft, so dass die Fliehkraftscheiben erst ab dieser ersten Grenzumdrehungsgeschwindigkeit beginnen, sich voneinander weg zu bewegen. Ein mit einer der Fliehkraftscheiben verbundene Komponente (Magnetkomponente oder Bremskomponente) der Magnetbremse wird erst ab dieser ersten Grenzumdrehungsgeschwindigkeit in Richtung der anderen Komponente gedrückt, so dass die Magnetbremse erst ab der Grenzumdrehungsgeschwindigkeit beginnt ein Bremsdrehmoment zu erzeugen.

Ferner können die Federkraft des Federelements und der Federkompressionsweg derart bemessen sein, dass sich die Magnetbremskomponenten ab einer zweiten Grenzumdrehungsgeschwindigkeit in der Bremsposition befinden, in der die Bremskomponente vollständig innerhalb des von der Magnetkomponente erzeugten Magnetfeldes angeordnet ist.

Eine weitere Ausführungsform betrifft eine der vorstehend beschriebenen Förderrollen, wobei die erste Fliehkraftscheibe als Teil des Bremsantriebs ausgeführt ist.

Die erste Fliehkraftscheibe kann als separates Teil unmittelbar oder mittelbar, d.h. über weitere Teile, drehfest an dem Bremsantrieb befestigt sein. Denkbar ist ebenfalls, dass die erste Fliehkraftscheibe mittelbar oder unmittelbar drehfest an der Magnetkomponente befestigt ist. Bei einer weiteren Ausführungsform kann die erste Fliehkraftscheibe einstückig mit dem Bremsantrieb, insbesondere mit einem als Zahnrad des Getriebes ausgebildeten Bremsantrieb, und/oder einstückig mit der Bremskomponente der Magnetbremse oder einstückig mit der Magnetkomponente der Magnetbremse, insbesondere mit einem Magnetträger der Magnetkomponente, ausgebildet sein. Insbesondere können sowohl die erste Fliehkraftscheibe als auch der als Zahnrad des Getriebes ausgebildete Bremsantrieb als auch der Magnetträger der Magnetkomponente der Magnetbremse einstückig ausgebildet sein, d.h. aus einem Stück hergestellt sein. Dieses einstückige Bauteil kann auf dem Achselement, das als durchgehende Achse ausgeführt sein kann, drehbar gelagert sein.

Eine weitere Ausführungsform betrifft eine der vorstehend beschriebenen Förderrollen, wobei die Fliehkrafteinrichtung eine Freilauffunktion aufweist.

Die Freilauffunktion kann derart gestaltet sein, dass die Fliehkrafteinrichtung bei einer Rotation der Fliehkraftscheibe(n) in einer ersten Drehrichtung bei Erreichen einer Grenzdrehgeschwindigkeit betätigt wird und dass die Fliehkrafteinrichtung bei einer Rotation in einer zweiten Drehrichtung, die der ersten Drehrichtung entgegengesetzt ist, auch bei Überschreiten einer Grenzdrehgeschwindigkeit nicht betätigt wird. Im Fall der vorstehend beschriebenen Ausführungsform, bei der ein Fliehkraftkörper zwischen einer ersten und einer zweiten Fliehkraftscheibe angeordnet ist, kann es dem Fliehkraftkörper bei einer Rotation in der ersten Drehrichtung ermöglicht werden, sich entlang des Fliehkraftgangs nach außen zu bewegen, während der Fliehkraftkörper bei einer Rotation in der zweiten Drehrichtung im Innenbereich der Fliehkrafteinrichtung fixiert wird.

Eine weitere Ausführungsform betrifft eine der vorstehend beschriebenen Förderrollen, wobei die Freilauffunktion durch eine Erweiterung des Fliehkraftgangs um einen Freilaufgang bereitgestellt wird, wobei sich der Freilaufgang auf der radial innenliegenden Seite des Fliehkraftgangs an den Fliehkraftgang anschließt und im Wesentlichen in Umfangsrichtung der Fliehkraftscheibe verläuft.

Durch diese Gestaltung kann bewirkt werden, dass der Fliehkraftkörper aufgrund seiner Massenträgheit beim Anlaufen der Fliehkraftscheibe(n) in Richtung der zweiten Drehrichtung in den Freilaufgang eintritt und bei anhaltender Rotation der Fliehkraftscheibe(n) in der zweiten Drehrichtung in dem Freilaufgang gehalten wird, so dass er an einem Eintreten in den Fliehkraftgang gehindert wird. Dabei kann der Freilaufgang einen leicht von einer reinen Umfangslinie abweichenden Verlauf aufweisen, der sich, z.B. spiralartig, von der Verbindungsstelle des Freilaufgangs mit dem Fliehkraftgang weg erstreckt und dabei leicht radial nach außen von der Umfangslinie abweicht. Bei einem solchen Verlauf würde der Fliehkraftkörper während einer Rotation der Fliehkraftscheiben aufgrund der Fliehkraft in dem Bereich des Freilaufgangs gehalten, der sich radial am weitesten in Richtung des Mantelelements erstreckt. So würde der Fliehkraftkörper im Freilaufgang während einer Rotation aufgrund der Fliehkraft daran gehindert, in Richtung des Fliehkraftgangs verlagert zu werden, dann in den Fliehkraftgang einzutreten und schließlich die Fliehkrafteinrichtung zu betätigen.

Eine weitere Ausführungsform betrifft eine der vorstehend beschriebenen Förderrollen, wobei die Freilauffunktion durch eine Fliehkraftsperre bereitgestellt wird, welche die Fliehkraftscheiben in einer zu der Drehachse parallelen Richtung relativ zueinander verriegelt.

"In einer zu der Drehachse parallelen Richtung verriegelt" bedeutet, dass verhindert wird, dass sich die Fliehkraftscheiben in dieser Richtung auseinander bewegen können. Durch diese Gestaltung der Freilauffunktion kann bewirkt werden, dass die Fliehkraftscheiben beim Anlaufen der Fliehkraftscheibe(n) in Richtung der zweiten Drehrichtung in axialer Richtung zueinander fixiert werden, so dass der Fliehkraftkörper in einer radial innen liegenden Position gehalten und auch bei steigender Fliehkraft an einem Eintreten in den Fliehkraftgang gehindert wird. Die Verriegelung kann durch ein Riegelelement bewirkt werden, welches beim Verriegeln eine korrespondierende Sperrfläche hintergreifen kann.

Ein solches Riegelelement kann z.B. an einer der Fliehkraftscheiben angeordnet sein. Das Riegelelement kann einstückig mit der Fliehkraftscheibe verbunden sein. Die Sperrfläche kann an der anderen Fliehkraftscheibe angeordnet sein, z.B. auf einer Seite einer Durchtrittsöffnung, welche von dem Riegelelement in axialer Richtung durchdrungen werden kann.

Ein zweiter unabhängiger Aspekt zur Lösung der Aufgabe betrifft eine Förderstrecke mit mehreren Förderrollen, von denen zumindest eine Förderrolle einer beliebigen Förderrolle entspricht, die vorstehend in Bezug auf den ersten Aspekt beschrieben wurde.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereit stellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden um unnötige Wiederholungen zu vermeiden bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann, und daher in Erwägung gezogen und auch als von der Beschreibung umfasst angesehen werden soll.

### Kurze Beschreibung der Zeichnungen

- Figur 1: zeigt eine Ausführungsform einer Förderrolle mit einer Wirbelstrombremse in einer Ruheposition in einem Längsschnitt.
- Figur 2: zeigt die Ausführungsform der Förderrolle aus Figur 1 in einer Bremsposition in einem Längsschnitt.
- Figur 3: zeigt die Wirbelstrombremse der Förderrolle aus Figur 1 in einer Seitenansicht.
- Figur 4: zeigt eine Fliehkraftscheibe einer Fliehkrafteinrichtung der Förderrolle in einer Seitenansicht im Stillstand der Förderrolle.
- Figur 5: zeigt die Fliehkraftscheibe aus Figur 4 in einer Seitenansicht beim Anlaufen der Förderrolle in einer Drehrichtung, in der eine Freilauffunktion der Förderrolle aktiviert wird.
- Figuren 6a und 6b: zeigen zwei korrespondierende Fliehkraftscheiben einer weiteren Ausführungsform einer Förderrollemit mit einer Fliehkraftsperre in einer Verriegelungsposition, in der die Freilauffunktion aktiviert wird.
- Figuren 7a und 7b: zeigen die korrespondierenden Fliehkraftscheiben der Figuren 6a und 6b in einer entriegelten Stellung, in der die Bremsfunktion bereitgestellt wird.

### Detaillierte Beschreibung der Zeichnung

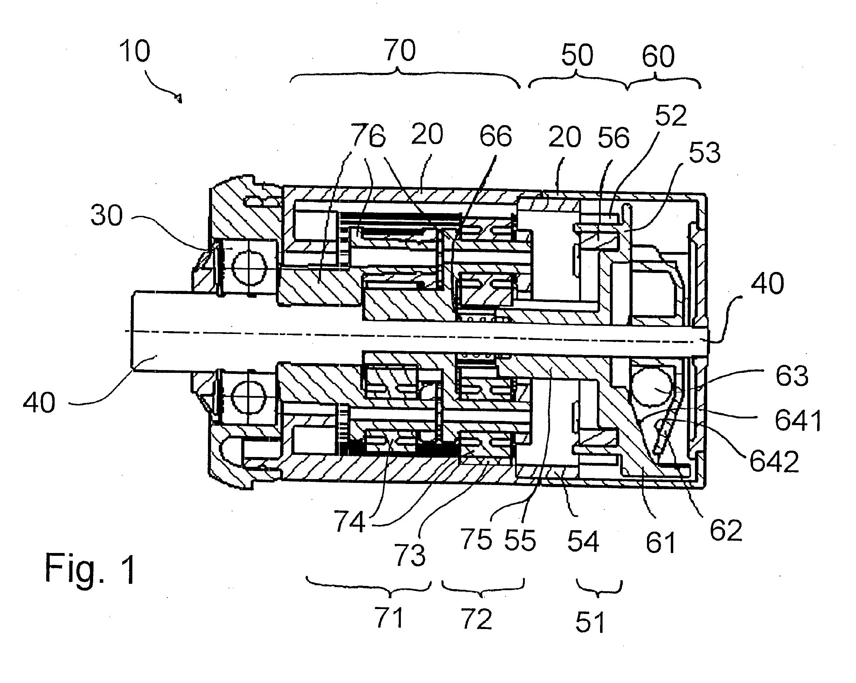

**Figur 1** zeigt eine Ausführungsform einer Förderrolle 10 mit einem Mantelelement 20, das über Lager 30, von denen nur eines dargestellt ist auf einer Achse gelagert ist. In der dargestellten Ausführungsform ist die Achse zweiteilig ausgeführt, so dass die Förderrolle 10 ein Achselement 40 aufweist, das bei der in der Figur 1 dargestellten Förderrolle 10 auf der linken Seite der Förderrolle 10 angeordnet ist. Ferner kann die Förderrolle 10 auf der gegenüberliegenden Seite ein anderes Achselement aufweisen. Denkbar ist ebenfalls eine Gestaltung mit einer durchgehenden Achse.

Die dargestellte Förderrolle 10 weist innerhalb des Mantelelements 20 ein Getriebe 70, eine Magnetbremse 50, die als Wirbelstrombremse ausgeführt ist, und eine Fliehkrafteinrichtung 60 auf.

Das Getriebe 70 ist als zweistufiges Planetenradgetriebe mit einer ersten Getriebestufe 71 und einer zweiten Getriebestufe 72 ausgeführt. Jede der Getriebestufen 71, 72 weist einen Planetenträger 76 mit drei an dem Planetenträger 76 drehbar gelagerten Planetenrädern 74 auf, die sich einerseits in Eingriff mit einem Hohlrad 73 und andererseits in Eingriff mit einem Sonnenrad 75 befinden. Dabei ist das Sonnenrad 75 der ersten Getriebestufe 71 einstückig an dem Planetenträger 76 der zweiten Getriebestufe 72 ausgebildet. Das Sonnenrad 75 der zweiten Getriebestufe ist einstückig an einem Bremsantrieb 55 der Magnetbremse 50 ausgebildet.

Denkbar sind ebenfalls andere Konstruktionsformen eines Planetengetriebes. Anstelle eines Planetengetriebes können auch andere Getriebeformen eingesetzt werden, welche eine ausreichendes Drehmoment übertragen können und die gewünschte Übersetzung gewährleisten.

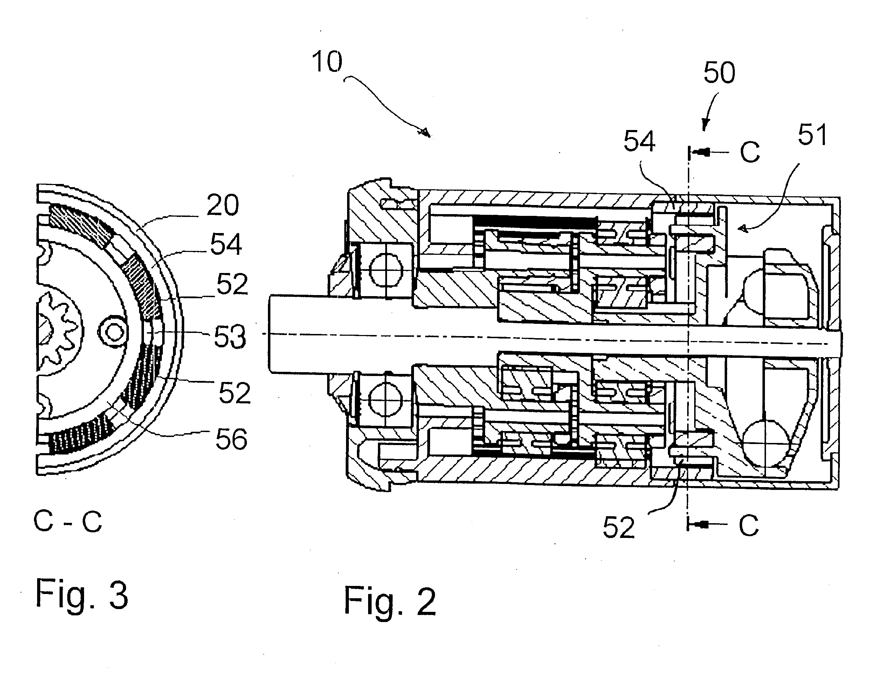

Der Bremsantrieb 55 ist in der dargestellten Ausführungsform ferner einstückig mit einem Magnetträger 53 der Magnetbremse 50 ausgebildet. An dem Magnetträger 53 sind mehrere Magnete 52 befestigt. In der gezeigten Ausführungsform sind die Magnete als flache Stabmagnete ausgebildet, die umfänglich um den Magnetträger 53 angeordnet sind, wobei die Pluspole und die Minuspole der Magnete jeweils abwechselnd radial nach außen weisen. Die Anordnung der Magnete 52 ist in Figur 3 besser ersichtlich.

**Figur 3** zeigt die Wirbelstrombremse der Förderrolle 10 aus Figur 1 in einer Seitenansicht entlang eines Schnitts, der in Figur 2 mit C-C bezeichnet ist.

Dabei sind in Figuren 3 vier von acht Magneten 52 dargestellt. Radial innerhalb der Magnete ist ein Ankerring 56 zur Verstärkung des magnetischen Flusses angeordnet. Radial außerhalb der Magnete schließt sich eine Bremskomponente 54 und das Mantelelement 20 an. Die Magnete 52 und die Bremskomponente 54 sind über einen schmalen Luftspalt getrennt, so dass sich die Magnetkomponente 51 innerhalb der Bremskomponente 54 drehen kann.

Die Bremskomponente 54 der Magnetbremse 50 weist in der dargestellten Ausführungsform die Form eines Rohrabschnitts mit kreiszylindrischem Querschnitt auf. Die Bremskomponente 54 kann z.B. aus Messing hergestellt sein.

Wie in Figur 1 dargestellt ist, liegt die Bremskomponente 54 in der dargestellten Ausführungsform außenumfänglich an dem Mantelelement 20 an, das in Längsrichtung der Förderrolle 10, wie dargestellt, aus zumindest zwei Bauteilen zusammengesetzt ist, die im Bereich der Bremskomponente 54 bündig aneinander stoßen. In der dargestellten Ausführungsform ist eines der beiden Bauteile ein Gehäuseelement des Getriebes 70, das somit in dieser Ausführungsform gleichermaßen Bestandteil des Getriebes 70 und des Mantelelements 20 ist. Die Bremskomponente 54 kann in eines oder beide der bündig aneinander stoßenden Bauteile eingeschraubt oder eingepresst sein. Andere Fügeverfahren sind ebenfalls denkbar. Ferner ist denkbar, dass das Mantelelement 20 lediglich aus einem oder aus mehr als zwei Teilen besteht.

In der dargestellten Ausführungsform ist der Magnetträger 53 drehbar und axial verschieblich auf einem Achselement 40 der Förderrolle 10 gelagert.

In der in Figur 1 dargestellten Ruheposition ist der Magnetträger 53 in die in der Figur am weitesten rechte Position verlagert. Dabei wird der Magnetträger 53 über einen Federelement 66, das in der dargestellten Ausführungsform als Schraubenfeder ausgeführt ist, in diese Position gedrückt und gehalten.

In dieser Position befinden sich die Magnete 52 der Magnetkomponente 51 soweit außerhalb des Magnetfelds der Magnete 52, dass das Magnetfeld nur einen zu vernachlässigenden Einfluss auf die Bremskomponente 54 hat. Mit anderen Worten wird in dieser Position der Magnetkomponente 51 im Verhältnis zur Bremskomponente 54 auch bei einer Rotation der Magnetkomponente 51 relativ zu der Bremskomponente 54 keine oder lediglich eine zu vernachlässigende Bremswirkung erzielt. Diese Position wird daher als Ruheposition der Magnetbremse 50 bezeichnet.

**Figur 2** zeigt die Ausführungsform der Förderrolle 10 aus Figur 1 in einer Position, in der die Magnetkomponente 51 in axialer Richtung in die rohrförmige Bremskomponente 54 verlagert ist. In dieser Position wird die Bremskomponente 54 von dem Magnetfeld der Magnete 52 der Magnetkomponente 51 durchdrungen, so dass bei einer Rotation der Bremskomponente 54 um die Magnetkomponente 51 Wirbelströme in die Bremskomponente 54 induziert werden und eine resultierendes Bremsdrehmoment erzeugt wird. Diese Position wird als Bremsposition bezeichnet.

Zur Verlagerung der Magnetkomponente 51 in die Bremsposition ist die Magnetkomponente 51 mit einer Fliehkrafteinrichtung 60 verbunden.

Die Fliehkrafteinrichtung 60 weist eine erste Fliehkraftscheibe 61, eine zweite Fliehkraftscheibe 62 und einen Fliehkraftkörper 63 auf. Bei einer Rotation der Bauteile in einer Richtung, in der die Förderrolle gebremst werden soll, wird der Fliehkraftkörper 63 aufgrund der Fliehkraft nach außen gedrückt, wobei er die erste Fliehkraftscheibe 61 und die zweite Fliehkraftscheibe 62 bezogen auf die Drehachse in axialer Richtung auseinander drückt. Hierzu ist in der dargestellten Ausführungsform an der ersten Fliehkraftscheibe 61 eine erste Fliehkraftscheibenfläche 641 vorgesehen und an der zweiten Fliehkraftscheibe 62 eine zweite Fliehkraftscheibenfläche 642. Die beiden Fliehkraftscheibenflächen 641, 642 weisen in der dargestellten Ausführungsform jeweils eine Steigung radial nach außen in Richtung der benachbarten Fliehkraftscheibe 61, 62 auf.

Dabei ist die erste Fliehkraftscheibe 61 einstückig an dem Magnetträger 53 ausgeformt. Demnach wird der Magnetträger 53 zusammen mit der ersten Fliehkraftscheibe 61 entgegen der Federkraft des Federelements 66 in die Bremsposition verlagert, wenn der Fliehkraftkörper 63 aufgrund der Fliehkraft nach außen gedrückt wird.

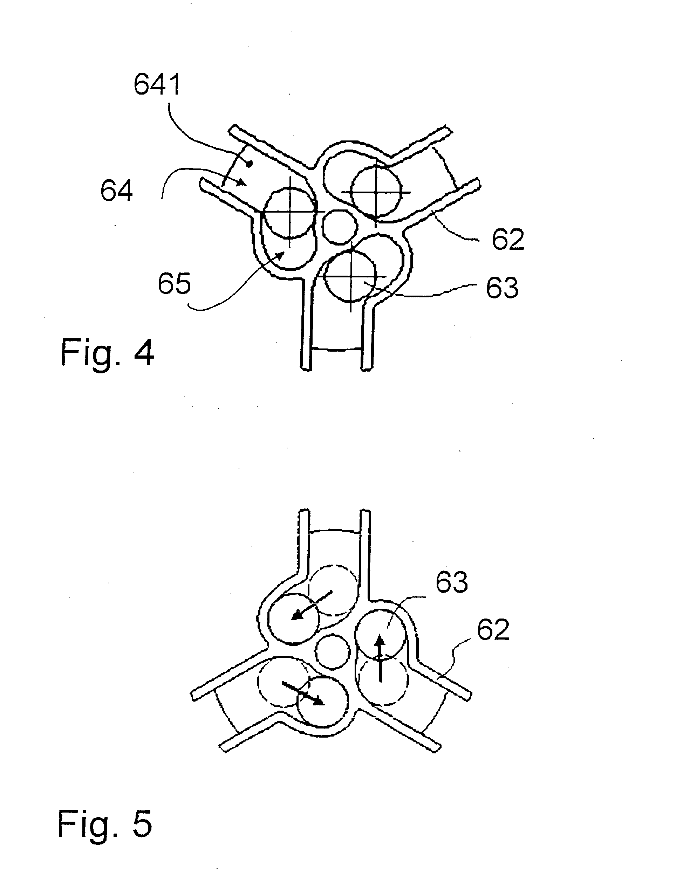

**Figur 4** zeigt die zweite Fliehkraftscheibe 62 der Fliehkrafteinrichtung 60 der Förderrolle 10 in einer Seitenansicht im Stillstand der Förderrolle 10.

In der dargestellten Ansicht ist ersichtlich, dass die erste Fliehkraftscheibe 623 Fliehkraftgänge 64 aufweist, wobei die erste Fliehkraftscheibenfläche jeweils am Boden des Fliehkraftgangs 64 angeordnet ist. In seitlicher Richtung werden die Fliehkraft ginge 64 durch Seitenwände begrenzt, welche die drei dargestellten Fliehkraftkörper 63, die in der dargestellten Ausführungsform jeweils als Kugel ausgebildet ist, führen, wenn die Kugeln aufgrund der Fliehkraft nach außen gedrückt werden. In Figur vier sind die Kugeln am Beginn der drei Fliehkraftgänge 64 dargestellt, von wo aus sie sich bei einer Aktivierung der Fliehkraftbremse nach außen gelegenen, wenn sich die Förderrolle 10 in einer ersten Drehrichtung dreht.

Wenn sich die Förderrolle 10 in einer zweiten Drehrichtung dreht, welche der ersten Drehrichtung entgegengesetzt ist, laufen die Kugeln nicht in die Fliehkraftgänge 64 ein, sondern aus der in Figur 4 dargestellten Position in Richtung der Pfeile, die in **Figur 5** dargestellt sind. In Pfeilrichtung erstrecken sich Freilaufgänge 65, die mit den Fliehkraftgänge 64 verbunden sind und sich von der Verbindungsstelle zwischen Fliehkraftgängen 64 und Freilaufgängen 65 in Umfangsrichtung erstrecken. In den Freilaufgängen 65 werden die Kugeln bei einer Rotation in Richtung der zweite Drehrichtung aufgenommen, so dass eine Aktivierung der Fliehkraftbremse verhindert wird.

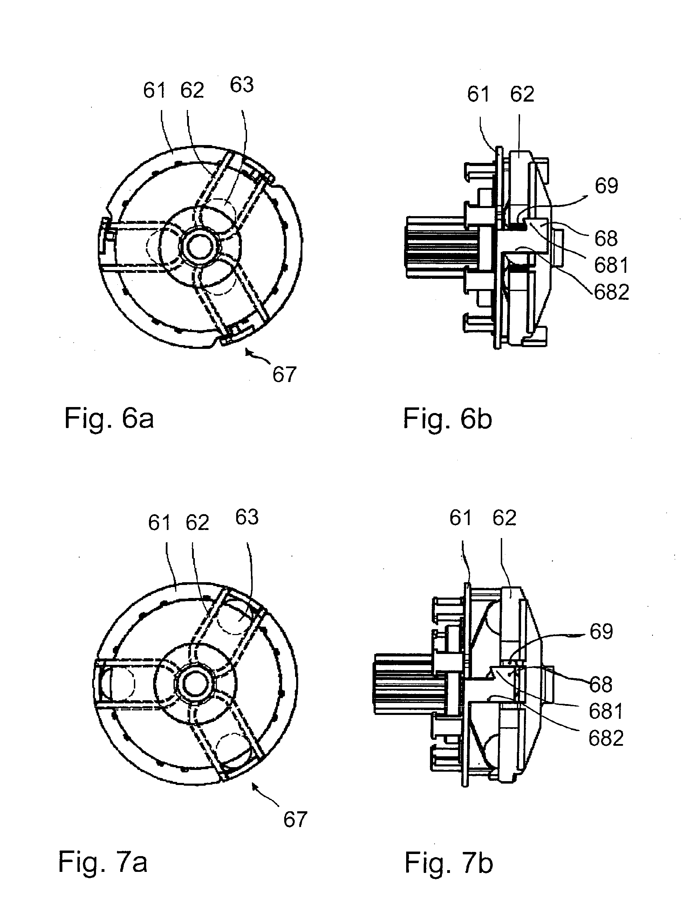

**Figuren 6a und 6b** zeigen zwei korrespondierende Fliehkraftscheiben 61, 62 einer weiteren Ausführungsform einer Förderrolle 10 mit einer Fliehkraftsperre 67 in einer Verriegelungsposition, in der die Freilauffunktion aktiviert ist. Dabei sind an der ersten Fliehkraftscheibe 61, an der in dieser Ausführungsform der Bremsantrieb und die Magnetkomponente 51 vorgesehen sind, drei Riegelelemente 68 angeordnet, welche in korrespondierende Durchtrittsöffnungen der zweiten Fliehkraftscheibe 62 hineinragen. Die Riegelelemente 68 der Fliehkraftsperre 67 weisen jeweils eine Verriegelungsseite 681 auf, die in der dargestellten Ausführungsform jeweils einen hakenartigen Vorsprung aufweisen.

In der in Figuren 6a und 6b dargestellten Position der Fliehkraftscheiben 61, 62, in der die Freilauffunktion aktiviert ist, hintergreifen die hakenartigen Vorsprünge korrespondierende Sperrflächen 69 der zweiten Fliehkraftscheibe 62. In dieser Position der Fliehkraftscheiben 61, 62 verriegelt die Fliehkraftsperre 67 die Fliehkraftscheiben 61, 62 in einer zu der Drehachse parallelen Richtung relativ zueinander. Auch bei höheren Drehzahlen kann der Fliehkraftkörper die Fliehkraftscheiben 61, 62 nicht auseinander drücken.
**Figuren 7a und 7b** zeigen die korrespondierenden Fliehkraftscheiben 61, 62 der Figuren 6a und 6b in einer entriegelten Stellung, in der die Bremsfunktion der Magnetbremse 50 bereitgestellt wird.

In dieser Position der Fliehkraftscheiben 61, 62 verriegelt das Riegelelement 68 die beiden Fliehkraftscheiben 61, 62 nicht relativ zueinander. Vielmehr können die beiden Fliehkraftscheiben 61, 62 in dieser Position relativ zueinander durch den Fliehkraftkörper auseinander gedrückt werden, so dass die Magnetbremse 50 mit steigender Drehzahl ihre Bremskraft bereit stellen kann.

Die Fliehkraftsperre 67 kann derart gestaltet sein, dass sich das Riegelelement 68 permanent in den korrespondierenden Durchtrittsöffnungen der zweiten Fliehkraftscheibe 62 angeordnet sind. Die zweite Fliehkraftscheibe 62 kann z.B. auf dem Achselement 40 drehbar gelagert sein und dabei relativ zur ersten Fliehraftscheibe 61 verdrehbar angeordnet sein, wobei eine Verdrehung durch das Riegelelement 68 und die korrespondierende Durchtrittsöffnung begrenzt werden kann.

Wenn die Förderrolle 10 bei einer solchen Gestaltung in einer Richtung anläuft, in der bei höheren Drehzahlen die Bremsfunktion der Magnetbremse 50 bereit gestellt werden soll, können sich die beiden Fliehkraftscheiben 61, 62 soweit zueinander verdrehen, bis eine Anschlagseite 682 des Riegelelements auf einer Seite der mit dem Riegelelement korrespondierenden Durchtrittsöffnung anschlägt. Aufgrund einer entsprechenden, z.B. geradlinigen Gestaltung der Anschlagseite 682 können sich die beiden Fliehkraftscheiben 61, 62 in axialer Richtung auseinander bewegen.

Wenn die Förderrolle 10 in der anderen Richtung anläuft, in der auch bei höheren Drehzahlen keine Bremsfunktion bereit gestellt werden soll, verdrehen sich die beiden Fliehkraftscheiben 61, 62 relativ zueinander, bis der hakenartige Vorsprung der Verriegelungsseite 681 des Riegelelements 68 auf der anderen Seite der Durchtrittsöffnung die Sperrfläche 69 hintergreift und die beiden Fliehkraftscheiben 61, 62 in axialer Richtung relativ zueinander verriegelt, so dass der Fliehkraftkörper auch bei höheren Geschwindigkeiten in einer radial innen liegenden Position gehalten und auch bei steigender Fliehkraft an einem Eintreten in den Fliehkraftgang 64 gehindert wird.

### Bezugszeichenliste

- 10: Förderrolle
- 20: Mantelelement
- 30: Lager
- 40: Achselement
- 50: Magnetbremse
- 51: Magnetkomponente
- 52: Magnet
- 53: Magnetträger
- 54: Bremskomponente
- 55: Bremsantrieb
- 56: Ankerring
- 60: Fliehkrafteinrichtung
- 61: erste Fliehkraftscheibe
- 62: zweite Fliehkraftscheibe
- 63: Fliehkraftkörper
- 64: Fliehkraftgang
- 641: erste Fliehkraftscheibenfläche
- 642: zweite Fliehkraftscheibenfläche
- 65: Freilaufgang
- 66: Federelement
- 67: Fliehkraftsperre
- 68: Riegelelement
- 681: Verriegelungsseite
- 682: Anschlagsseite
- 69: Sperrfläche
- 70: Getriebe
- 71: erste Getriebestufe
- 72: zweite Getriebestufe
- 73: Hohlrad
- 74: Planetenrad
- 75: Sonnenrad
- 76: Planetenträger

## Patentansprüche

1. Förderrolle (10) umfassend ein Mantelelement (20), ein Achselement (40) und eine Magnetbremse (50) mit einer Magnetkomponente (51) und einer mit der Magnetkomponente (51) korrespondierenden Bremskomponente (54), wobei das Mantelelement (20) relativ zu dem Achselement (40) um eine Drehachse drehbar gelagert ist, wobei die Magnetbremse (50) kinematisch zwischen dem Achselement (40) und dem Mantelelement (20) vorgesehen und mit dem Achselement (40) und dem Mantelelement (20) derart verbunden ist, dass eine Drehung des Mantelelements um die Drehachse durch die Magnetbremse (50) gebremst werden kann,
wobei die Magnetkomponente (51) und die Bremskomponente (54) relativ zueinander zwischen einer Ruheposition und einer Bremsposition verlagerbar angeordnet sind, und wobei ferner eine Fliehkrafteinrichtung (60) zur drehzahlabhängigen Verlagerung zumindest einer der Magnetbremskomponenten (51, 54) zwischen der Ruheposition und der Bremsposition vorgesehen ist.

2. Förderrolle (10) nach Anspruch 1, wobei die Magnetkomponente (51) einen Magnetträger (53) und zumindest einen an dem Magnetträger (53) befestigten Magneten (52) aufweist.

3. Förderrolle (10) nach einem der vorstehenden Ansprüche, wobei die Bremskomponente (54) als Rohrabschnitt mit einem kreiszylindrischen Querschnitt ausgebildet ist.

4. Förderrolle (10) nach einem der vorstehenden Ansprüche, wobei die Bremskomponente (54) als fester Bestandteil des Mantelelements ausgeführt ist, und wobei die Magnetkomponente (51) in der Bremsposition in einer zur Drehachse des Mantelelements parallelen Richtung zumindest teilweise innerhalb der Bremskomponente (54) verlagert ist.

5. Förderrolle (10) nach einem der vorstehenden Ansprüche, wobei die Magnetkomponente (51) in der Ruheposition in einer zur Drehachse des Mantelelements parallelen Richtung außerhalb der Bremskomponente (54) angeordnet ist.

6. Förderrolle (10) nach einem der vorstehenden Ansprüche, wobei die Förderrolle ferner ein Getriebe (70) aufweist, wobei das Getriebe (70) derart innerhalb der Förderrolle angeordnet ist, dass über das Getriebe (70) eine rotatorische Relativbewegung zwischen dem Mantelelement (20) und dem Achselement (40) in eine rotatorische Antriebsbewegung eines Bremsantriebs (55) der Magnetbremse (50) umwandelbar ist.

7. Förderrolle (10) nach Anspruch 6, wobei ein Abschnitt des Bremsantriebs (55) als ein Zahnrad des Getriebes (70) der Magnetbremse ausgebildet ist.

8. Förderrolle (10) nach einem der vorstehenden Ansprüche 6 oder 7, wobei der Bremsantrieb (55) mit der Magnetkomponente (51) derart verbunden ist, dass der Bremsantrieb (55) mit der Magnetkomponente (51) gemeinsam rotatorisch antreibbar und verschieblich gelagert bereit gestellt wird.

9. Förderrolle (10) nach einem der vorstehenden Ansprüche 1 - 6, wobei das Getriebe ein Planetengetriebe mit einem Sonnenrad (75) und zumindest einem Planetenrad (74) aufweist und wobei das Sonnenrad (75) des Planetengetriebes als ein Abschnitt des Bremsantriebs (55) ausgebildet ist, das in einer zu der Drehachse des Sonnenrades (75) parallelen Richtung relativ zu dem zumindest einen Planetenrad (74) verschieblich gelagert ist.

10. Förderrolle (10) nach einem der vorstehenden Ansprüche, wobei die Fliehkrafteinrichtung (60) eine erste Fliehkraftscheibe (61) und eine zweite Fliehkraftscheibe (62) und zumindest einen zwischen der ersten Fliehkraftscheibe (61) und der zweiten Fliehkraftscheibe (62) angeordneten Fliehkraftkörper (63) aufweist, wobei die erste Fliehkraftscheibe (61) und die zweite Fliehkraftscheibe (62) jeweils um eine gemeinsame Drehachse drehbar und relativ zueinander in einer zu der Drehachse parallelen Richtung verschieblich gelagert sind, wobei der zumindest eine Fliehkraftkörper (63) in einem Fliehkraftgang (64) geführt wird, wobei die erste Fliehkraftscheibe (61) und die zweite Fliehkraftscheibe (62) zumindest entlang eines Teilbereichs des Fliehkraftgangs (64) miteinander korrespondierende Fliehkraftscheibenflächen (641, 642) aufweisen, von denen zumindest eine der beiden Fliehkraftscheibenflächen (641, 642) eine Steigung aufweist, die bewirkt dass die Fliehkraftscheiben (61, 62) in einer zu der Drehachse parallelen Richtung durch den Fliehkraftkörper (63) auseinander gedrückt werden, wenn der Fliehkraftkörper (63) von der Drehachse weg nach außen verlagert wird.

11. Förderrolle (10) nach Anspruch 10, wobei zumindest eine der beiden Fliehkraftscheiben (61, 62) durch ein Federelement (66) in Richtung der anderen Fliehkraftscheibe (61, 62) vorgespannt ist, so dass der Fliehkraftkörper (63) entlang seines radialen Verlagerungswegs ständig mit beiden Fliehkraftscheiben (61, 62) in Berührungskontakt steht.

12. Förderrolle (10) nach einem der vorstehenden Ansprüche 10 oder 11, wobei die erste Fliehkraftscheibe (61) als Teil des Bremsantriebs (55) ausgeführt ist.

13. Förderrolle (10) nach einem der vorstehenden Ansprüche 10 bis 12, wobei die Fliehkrafteinrichtung (60) eine Freilauffunktion aufweist.

14. Förderrolle (10) nach Anspruch 13, wobei die Freilauffunktion durch eine Erweiterung des Fliehkraftgangs (64) um einen Freilaufgang (65) bereitgestellt wird, wobei sich der Freilaufgang (65) auf der radial innenliegenden Seite des Fliehkraftgangs (64) an den Fliehkraftgang (64) anschließt und im Wesentlichen in Umfangsrichtung der Fliehkraftscheiben (61, 62) verläuft.

15. Förderrolle (10) nach Anspruch 13, wobei die Freilauffunktion durch eine Fliehkraftsperre (67) bereitgestellt wird, welche die Fliehkraftscheiben (61, 62)) in einer zu der Drehachse parallelen Richtung relativ zueinander verriegelt.
